# EUROPÄISCHE PATENTSCHRIFT

(11) **EP 2 021 602 B1**
(45) Veröffentlichungstag und Bekanntmachung des Hinweises auf die Patenterteilung: **21.04.2010**
(21) Anmeldenummer: 07722377.4
(22) Anmeldetag: 09.05.2007
(51) Int. Cl.: F02C 9/26, F02C 7/32

(54) **MODULARE KRAFTSTOFFVERSORGUNGSEINRICHTUNG EINER GASTURBINE**
MODULAR FUEL SUPPLY DEVICE FOR A GAS TURBINE
DISPOSITIF MODULAIRE D'ALIMENTATION EN COMBUSTIBLE D'UNE TURBINE À GAZ

(30) Priorität: 18.05.2006 DE 102006023237
(43) Veröffentlichungstag der Anmeldung: 11.02.2009
(73) Patentinhaber: MTU Aero Engines GmbH, 80995 München (DE)
(72) Erfinder: WITTMANN, Peter, 85521 Ottobrunn (DE)
(86) Internationale Anmeldenummer: PCT/DE2007/000823
(87) Internationale Veröffentlichungsnummer: WO 2007/134568

(56) Entgegenhaltungen:
- WO-A-94/20739
- US-A- 3 596 467
- US-A1- 2007 130 911

## Beschreibung

Die Erfindung betrifft eine Gasturbine, insbesondere ein Gasturbinenflugtriebwerk, nach dem Oberbegriff des Anspruchs 1.

Aus der Praxis bekannte Gasturbinenflugtriebwerke verfügen über eine Kraftstoffversorgungseinrichtung, um eine Brennkammer des Gasturbinenffugtriebwerks mit Kraftstoff zu versorgen, sowie über eine zentrale Triebwerksregelungseinrichtung, mit Hilfe derer der Betrieb des Gasrurbinenflugtiebwerks geregelt bzw. gesteuert werden kann.

An die zentrale Triebwerksregelungseinrichtung sind eine Vielzahl von Sensoren sowie Aktuatoren angeschlossen, wodurch sich ein hoher Verkabelungsaufwand zwischen der zentralen Triebwerksregelungseinrichtung und den über das Gasturbinenflugtriebwerk verteilt angeordneten Sensoren sowie Aktuatoren ergibt.

Die Kraftstoffversorgungseinrichtung von aus der Praxis bekannten Gasturbinenflugtriebwerken verfügt beispielsweise über zwei Pumpen, wobei die Pumpen von einer Gearbox des Gasturbinenflugtriebwerks mechanisch angetrieben werden. Dabei ist die von jeder Pumpe geforderte Kraftstoffmenge proportional zur Drehzahl des Gasturbinenflugtriebwerks, was in bestimmten Betriebszuständen einen hohen Rezirkulationsfluss an Kraftstoff zur Folge haben kann.

Aus dem Dokument WO 94/20739 A, das alle Merkmale des Oberbegriffs des Anspruchs 1 offenbart, ist ein Gasturbinenflugtriebwerk mit einem integnierten Triebwerksregelungssystem benannt. Letzteres bildet eine sogenannte Line Replaceable Unit (LRU), besteht dabei aus mehreren einzelnen LRU's, die als Subsystem getrennte Funktionen übernehmen. Dabei beinhaltet eine Einheit eine Kraftstoffversorgungseinrichtung mit elektrischer Motor-Pumpen-Einheit und redundanter Motor-Regelungs-Einheit sowie einer integralen Triebwerks-Regelungs-Einheit. Siehe die Bezugszeichen 100, 190, 200/210, 270, 326 und 400 dieses Dokuments. Es ist ersichtlich, dass die Triebwerksregelung redundant ausgebildet ist und sowohl überwachende wie regelnde Recheneinheiten aufweist. Wie Fig. 7 dieses Dokuments zeigt, ist es auch üblich, Motor-Regelungs-Einheiten redundant auszuführen. Bei Ausfall eines Reglers kann der andere die geforderte Leistung in voller Höhe an den Motor liefern.

Hiervon ausgehend liegt der vorliegenden Erfindung das Problem zu Grunde, eine neuartige Gasturbine, insbesondere ein neuartiges Gasturbinenflugtriebwerk, mit einer besonders ausfallsicheren Kraftstoffversorgungseinrichtung zu schaffen.

Dieses Problem wird durch eine Gasturbine gemäß Anspruch 1 gelöst. Erfindungsgemäß weist die mindestens eine Motor-Regelungs-Einheit mehrere parallel arbeitende Regler auf, die auf Basis mindestens eines von der Triebwerks-Regelungs-Einheit bereitgestellten Steuerungssignals den Betrieb der Motor-Pumpen-Einheit steuern bzw. regeln, wobei jeder Regler einen Teil der Motorleistung liefert in der Weise, dass bei Ausfall eines Reglers noch die volle Leistung zur Verfugung steht.

Vorzugsweise sind die Motor-Pumpen-Einheit, die Motor-Regelungs-Einheit und die Triebwerk-Regelungs-Einheit jeweils als über Steckverbinder zu einer integralen Baugruppe koppelbare Line Replaceable Units ausgebildet, die bei montierter Gasturbine austauschbar sind.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

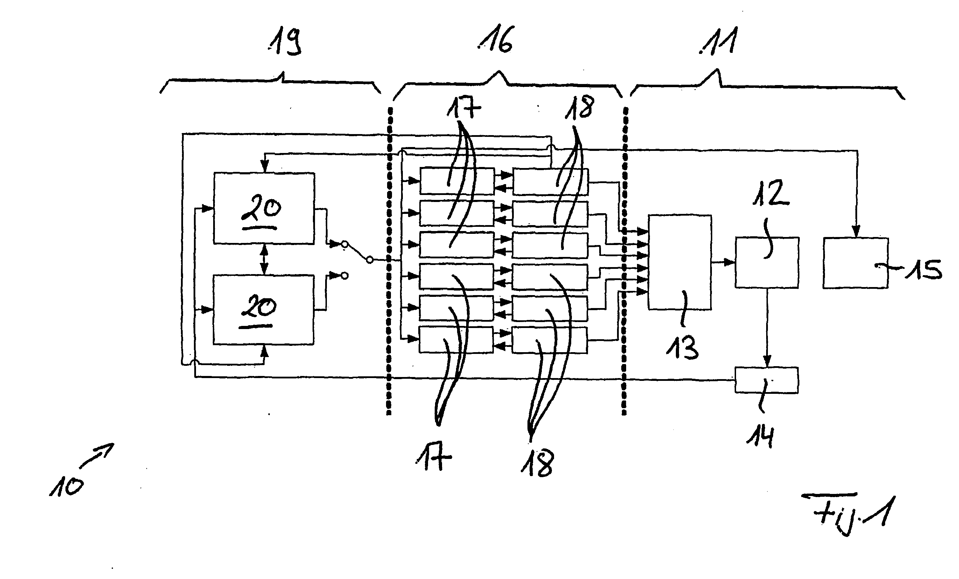

- Fig. 1: eine schematisierte Darstellung einer Kraftstoffversorgungseinrichtung einer erfindungsgemäßen Gasturbine.

Die hier vorliegende Erfindung betrifft eine Gasturbine, vorzugsweise ein Gasturbinenflugtriebwerk. Eine Gasturbine verfügt über mindestens einen Verdichter, mindestens eine Brennkammer sowie mindestens eine Turbine. Der Brennkammer kann über eine Kraftstoffversorgungseinrichtung in der Brennkammer zu verbrennender Kraftstoff zugeführt werden. Die Funktion der Gasturbine kann durch eine Regelungseinrichtung geregelt bzw. gesteuert werden, die bei Gasturbinenflugtriebwerken als Triebwerksregelungseinrichtung bezeichnet wird.

Im Sinne der hier vorliegenden Erfindung wird nun vorgeschlagen, im Sinne eines dezentralen Regelsystems Teile der Triebwerksregelungseinrichtung in die Kraftstoffversorgungseinrichtung zu integrieren. Hierauf wird im Detail am Ausführungsbeispiel der Fig. 1 eingegangen.

So zeigt Fig. 1 eine schematisierte Darstellung einer Kraftstoffversorgungseinrichtung 10 eines Gasturbinenflugtriebwerks. Die Kraftstoffversorgungseinrichtung 10 der Fig. 1 verfügt über eine Motor-Pumpen-Einheit 11 mit mindestens einer Pumpe 12, wobei die Pumpe 12 von einem Elektromotor 13 angetrieben bzw. betrieben wird. Weiterhin umfasst gemäß Fig. 1 die Motor-Pumpen-Einheit 11 der Kraftstoffversorgungseinrichtung 10 über einen Sensor 14 sowie ein Hauptventil 15, wobei mit Hilfe des Sensors 14 an der Pumpe 12 ein Messwert erfasst werden kann, und wobei mit Hilfe des Hauptventils 15 der Kraftstoffzufluss zur Brennkammer des Gasturbinenflugtriebwerks blockiert bzw. freigegeben werden kann. Zur Steuerung bzw. Regelung des Betriebs des mindestens einen Elektromotors 13 der Motor-Pumpen-Einheit 11 dient jeweils eine Motor-Regelungs-Einheit 16, die in die Kraftstoffversorgungseinrichtung 10 integriert ist. Die Motor-Regelungs-Einheit 16 verfügt über mehrere parallel arbeitende Regler 17, wobei jedem Regler 17 eine separate Leistungselektronik 18 zugeordnet ist. Im gezeigten Ausführungsbeispiel stellt jede einem Regler 17 zugeordnete Leistungselektronik 18 20% der maximalen Leistung für die Kraftstoffversorgungseinrichtung 10 bereit, so dass nach Ausfall einer Leistungselektronik immer noch 100% Leistung vorhanden sind und damit die Sicherheit gewährleistet wird. Dann, wenn zwei Regler 17 mit zugehöriger Leistungselektronik 18 ausfallen, wird die Leistung auf 80% der maximalen Leistung begrenzt. Neben der Motor-Pumpen-Einheit 11 und der Motor-Regelungs-Einheit 16 ist in die Kraftstoffversorgungseinrichtung 10 gemäß Fig. 1 weiterhin eine Triebwerks-Regelungs-Einheit 19 integriert. Bei der Triebwerk-Regelungs-Einheit 19 handelt es sich entweder um die vollständige Triebwerksregelungseinrichtung oder um Teile derselben.

Gemäß dem in Fig. 1 gezeigten Ausführungsbeispiel umfasst die in die Kraftstoffversorgungseinrichtung 10 integrierte Triebwerk-Regelungs-Einheit 19 zwei redundant arbeitende Regler 20. Die Regler 20 der Triebwerk-Regelungs-Einheit 19 steuern bzw. regeln den Betrieb der Motor-Pumpen-Einheit 16 und stellen sämtliche Sicherheitsfunktionen für die Kraftstoffversorgungseinrichtung 10 redundant bereit. Jeder Regler 20 ist aus mindestens 2 Recheneinheiten aufgebaut, wobei eine Recheneinheit die Regelung und die andere die Überwachung übernimmt. Wird hiebei eine Fehlfunktion festgestellt, so wird auf den redundanten Regler 20 umgeschaltet.

Gemäß Fig. 1 werden den beiden Reglern 20 der Triebwerk-Regelungs-Einheit 19 vom Sensor 14 bereitgestellte Messsignale zugeführt. Ebenso werden den Reglern 20 der Triebwerk-Regelungs-Einheit 19 Ausgangssignale der Leistungselektronik 18 der Motor-Regelungs-Einheit 16 zugeführt.

Die Motor-Pumpen-Einheit 11, die mindestens eine Motor-Regelungs-Einheit 16 sowie die Triebwerk-Regelungs-Einheit 19 sind vorzugsweise als über Steckverbinder koppelbare Module ausgebildet, die über die Steckverbinder zu einer integralen Kraftstoffversorgungseinrichtung 10 koppelbar sind. Hierdurch wird der notwendige Verkabelungsaufwand auf ein absolutes Minimum reduziert. Bei der Motor-Pumpen-Einheit 11, der Motor-Regelungs-Einheit 16 sowie der Triebwerks-Regelungs-Einheit 19 der Kraftstoffversorgungseinrichtung 10 handelt es sich um sogenannte Line Replaceable Units, die zu Reparaturarbeiten bei montierter Gasturbine bzw. bei montiertem Gasturbinenflugtriebwerk modulweise ausgetauscht werden können.

Die Motor-Regelungs-Einheit 16 der Kraftstoffversorgungseinrichtung 10 ist vorzugsweise kraftstoffgekühlt. Die Kühlung der Triebwerks-Regelungs-Einheit 19 erfolgt über die Motor-Regelungs-Einheit 16 (Conduction Cooling).

Wie bereits erwähnt, kann es sich bei der Triebwerks-Regelungs-Einheit 19 entweder um die vollständigen Triebwerksregler oder um Teile desselben handeln. Dann, wenn die Triebwerk-Regelungs-Einheit 19 lediglich Teile des Triebwerksreglers umfasst, sind andere Teile der Triebwerksregelungseinrichtung verteilt über das Gasturbinenflugtriebwerk angeordnet, so z.B. eine oder mehrere Signalaufbereitungseinheiten sowie eine oder mehrere intelligente Aktuatoren zur z.B. elektrischen Verstellung von Leitschaufeln des Gasturbinenflugtriebwerks. Die verteilten Teile der Triebwerksregelungseinrichtung können dann über mindestens einen Datenbus gekoppelt sein.

## Patentansprüche

1. Gasturbine, insbesondere Gasturbinenflugtriebwerk, mit einer Ksaftstoffversorgungseinrichtung (10) und einer Triebwerkszegelungseinrichtung, wobei zumindest Teile der Triebwerksregelungseinrichtung in die Kraftstoffversorgungseinrichtung (10) integriert sind, wobei die Kraftstoffversorgungseinrichtung (10) mindestens eine Pumpe (12) und mindestens einen die Pumpe(n) (12) antreibenden Elektromotor (13) aufweist, wobei die mindestens eine Pumpe (12) und der mindestens eine Elektromotor (13) eine Motor-Pumpen-Einheit (11) bilden, wobei die Kraftstoffversorgungseinrichtung (10) zusätzlich zu der Motor-Pumpen-Einheit (11) mindestens eine Motor-Regelungs-Einheit (16) zur Steuerung bzw. Regelung des Betriebs des mindestens einen Elektromotors (13) der Motor-Pumpen-Einheit (11) aufweist, und wobei die in die Kraftstoffversorgungseinrichtung (10) integrierten Teile der Triebwerksregelungseinrichtung eine Triebwerk-Regelungs-Einheit (19) zur Steuerung bzw. Regelung des Betriebs der mindestens einen Motor-Regelungs-Einheit (16) bilden,
**dadurch gekennzeichnet,**
**dass** die mindestens eine Motor-Regelungs-Einheit (16) mehrere parallel arbeitende Regler (17) umfasst, die auf Basis mindestens eines von der Triebwerk-Regelungs-Einheit (19) bereitgestellten Steuerungssignals den Betrieb der Motor-Pumpen-Einheit (11) steuern bzw. regeln, wobei jeder Regler (17) einen Teil der Motorleistung liefert in der Weise, dass bei Ausfall eines Reglers (17) noch die volle Leistung zur Verfügung steht.

2. Gasturbine nach Anspruch 1,
**dadurch gekennzeichnet,**
**dass** die Motor-Pumpen-Einheit (11), die mindestens eine Motor-Regelungs-Einheit (16) und die Triebwerk-Regelungs-Einheit (19) als über Steckverbinder zu einer integralen Baugruppe koppelbare Module ausgebildet sind.

3. Gasturbine nach Anspruch 1 oder 2,
**dadurch gekennzeichnet,**
**dass** die Motor-Pumpen-Einheit (11), die mindestens eine Motor-Regelungs-Einheit (16) und die Triebwerk-Regelungs-Einheit (19) als Line Replaceable Units ausgebildet sind, die bei montierter Gasturbine austauschbar sind.

4. Gasturbine nach einem der Ansprüche 1 bis 3,
**dadurch gekennzeichnet,**
**dass** die Triebwerk-Regelungs-Einheit (19) mehrere redundant arbeitende, jeweils eine Recheneinheit für die Regelung und eine Recheneinheit für die Überwachung aufweisende Regler (20) umfasst, die auf Basis mindestens einer Messgröße mindestens eines in die Motor-Pumpen-Einheit (11) integrierten Sensors (14) den Betrieb der mindestens einen Motor-Regelungs-Einheit (16) steuern bzw. regeln.

## Claims

1. A gas turbine, in particular a gas turbine aircraft engine, having a fuel-supply device (10) and an engine-regulating device, wherein at least parts of the engine-regulating device are integrated into the fuel-supply device (10), wherein the fuel-supply device (10) has at least one pump (12) and at least one electric motor (13) driving the pump(s) (12), wherein the at least one pump (12) and the at least one electric motor (13) form a motor-pump-unit (11), wherein in addition to the motor-pump-unit (11) the fuel-supply device (10) has at least one motor-regulating unit (16) for the control or regulation of the operation of the at least one electric motor (13) of the motor-pump-unit (11), and wherein the parts of the engine-regulating device that are integrated into the fuel-supply device (10) form an engine-regulating unit (19) for the control or regulation of the operation of the at least one motor-regulating unit (16),
**characterised in that**
the at least one motor-regulating unit (16) comprises a plurality of regulators (17) which operate in parallel and control or regulate the operation of the motor-pump-unit (11) on the basis of at least one control signal provided by the engine-regulating unit (19), wherein each regulator (17) delivers a portion of the motor power in such a way that in the event of failure of one regulator (17) the full power is still available.

2. A gas turbine according to claim 1,
**characterised in that**
the motor-pump-unit (11), the at least one motor-regulating unit (16) and the engine-regulating unit (19) are formed as modules that can be coupled by way of plug-in connectors to form an integral assembly.

3. A gas turbine according to claim 1 or 2,
**characterised in that**
the motor-pump-unit (11), the at least one motor-regulating unit (16) and the engine-regulating unit (19) are formed as line replaceable units that can be exchanged when the gas turbine is assembled.

4. A gas turbine according to one of claims 1 to 3,
**characterised in that**
the engine-regulating unit (19) comprises a plurality of redundantly operating regulators (20) which in each case have a computing unit for the regulation and a computing unit for the monitoring and which control or regulate the operation of the at least one motor-regulating unit (16) on the basis of at least one measured variable of at least one sensor (14) that is integrated into the motor-pump-unit (11).

## Revendications

1. Turbine à gaz, en particulier groupe motopropulseur avec turbine à gaz, comportant un dispositif d'alimentation en carburant (10) et un dispositif de réglage du groupe motopropulseur, sachant qu'au moins des parties du dispositif de réglage du groupe motopropulseur sont intégrées dans le dispositif d'alimentation en carburant (10), ledit dispositif d'alimentation en carburant (10) comportant au moins une pompe (12) et au moins un moteur électrique (13) actionnant la ou les pompe(s) (12), ladite au moins une pompe (12) et ledit au moins un moteur électrique (13) formant une unité avec moteur et pompe (11), le dispositif d'alimentation en carburant (10) comportant, en plus de l'unité avec moteur et pompe (11), au moins une unité de réglage du moteur (16) pour commander ou régler le fonctionnement dudit au moins un moteur électrique (13) de l'unité avec moteur et pompe (11), et les parties du dispositif de réglage du groupe motopropulseur, intégrées dans le dispositif d'alimentation en carburant (10), formant une unité de réglage du groupe motopropulseur (19) pour commander ou régler le fonctionnement de ladite au moins une unité de réglage du moteur (16), **caractérisée en ce que** ladite au moins une unité de réglage du moteur (16) comporte plusieurs régulateurs (17) travaillant parallèlement, qui commandent ou régulent le fonctionnement de l'unité avec moteur et pompe (11) sur la base d'au moins un signal de commande délivré par l'unité de réglage du groupe motopropulseur (19), chaque régulateur (17) fournissant une partie de la puissance du moteur, de telle sorte qu'en cas de panne d'un régulateur (17), la pleine puissance est encore disponible.

2. Turbine à gaz selon la revendication 1, **caractérisée en ce que** l'unité avec moteur et pompe (11), ladite au moins une unité de réglage du moteur (16) et l'unité de réglage du groupe motopropulseur (19) sont réalisées sous la forme de modules pouvant être couplés par des connecteurs à fiches pour former un groupe intégral.

3. Turbine à gaz selon la revendication 1 ou 2, **caractérisée en ce que** l'unité avec moteur et pompe (11), ladite au moins une unité de réglage du moteur (16) et l'unité de réglage du groupe motopropulseur (19) sont réalisées sous la forme d'unités remplaçables en ligne (line replaceable units), qui peuvent être remplacées lorsque la turbine à gaz est montée.

4. Turbine à gaz selon l'une quelconque des revendications 1 à 3, **caractérisée en ce que** l'unité de réglage du groupe motopropulseur (19) comporte plusieurs régulateurs (20) travaillant de manière redondante, qui sont munis chacun d'une unité de calcul pour le réglage et d'une unité de calcul pour la surveillance et qui commandent ou régulent le fonctionnement de ladite au moins une unité de réglage du moteur (16) sur la base d'au moins une grandeur de mesure d'au moins un capteur (14) intégré dans l'unité avec moteur et pompe (11).
